# EUROPÄISCHE PATENTSCHRIFT

(11) **EP 3 990 296 B1**
(45) Veröffentlichungstag und Bekanntmachung des Hinweises auf die Patenterteilung: **14.06.2023**
(21) Anmeldenummer: 20712862.0
(22) Anmeldetag: 05.03.2020
(51) Int. Cl.: B60C 23/06

(54) **VERFAHREN ZUM PRÜFEN DES REIFENDRUCKS EINES FAHRZEUGS**
METHOD FOR TESTING THE TYRE PRESSURE OF A VEHICLE
PROCÉDÉ POUR CONTRÔLER LA PRESSION DES PNEUMATIQUES D'UN VÉHICULE

(30) Priorität: 25.06.2019 DE 102019209137
(43) Veröffentlichungstag der Anmeldung: 04.05.2022
(73) Patentinhaber: ZF Friedrichshafen AG, 88046 Friedrichshafen (DE)
(72) Erfinder: PAPE, Dennis, 49179 Ostercappeln (DE); HOFMANN, Peter, 82319 Starnberg (DE)
(74) Vertreter: ZF Friedrichshafen AG
(86) Internationale Anmeldenummer: PCT/EP2020/055798
(87) Internationale Veröffentlichungsnummer: WO 2020/259877

(56) Entgegenhaltungen:
- EP-A1- 3 330 106
- EP-A2- 3 015 841
- DE-A1- 19 723 037

## Beschreibung

Die Erfindung betrifft ein Verfahren zum Prüfen des Reifendrucks eines Fahrzeugs, welches wenigstens ein Fahrzeugrad und einen Fahrzeugaufbau aufweist, der federnd auf dem Fahrzeugrad abgestützt ist, welches einen mit Gas gefüllten Reifen umfasst und mit diesem auf einem Untergrund aufsteht.

Gattungsgemäße Verfahren zum Prüfen des Reifendrucks sind aus den Offenlegungsschriften DE19723037 A1, EP3330106 A1 und EP3015841 A2 bekannt.

Wird ein Kraftfahrzeug abgestellt und steht still, verschleißt es lediglich durch Alterung. Soll das Kraftfahrzeug wieder genutzt werden, wird in der Regel davon ausgegangen, es in demselben Zustand vorzufinden, wie zuvor abgestellt. Wurde jedoch ein Fremdkörper in einen Reifen gefahren, kann dieser einen Druckverlust erleiden. Obwohl vor Fahrtantritt feststehen sollte, ob das Kraftfahrzeug fahrtauglich ist, umrundet ein Fahrer vor Fahrtantritt das Kraftfahrzeug in der Regel nicht, um sich über dessen Zustand zu informieren. Auch im Falle des autonomen Fahrens muss vor Fahrtantritt feststehen, ob das Kraftfahrzeug fahrtauglich ist oder nicht, beispielsweise weil Reifen zerstochen wurden, Ventile der Reifen defekt sind, Fremdkörper in die Reifen eingedrungen sind oder andere Manipulationen an den Reifen erfolgten. Ausgehend hiervon liegt der Erfindung die Aufgabe zugrunde, den Reifendruck, vorzugsweise vor Fahrtantritt, insbesondere automatisch, prüfen zu können.

Diese Aufgabe wird durch ein Verfahren nach Anspruch 1 gelöst. Bevorzugte Weiterbildungen des Verfahrens sind in den Unteransprüchen und in der nachfolgenden Beschreibung gegeben.

Das eingangs genannte Verfahren zum Prüfen des Reifendrucks eines Fahrzeugs, welches wenigstens ein Fahrzeugrad und einen Fahrzeugaufbau aufweist, der federnd auf dem Fahrzeugrad abgestützt ist, welches einen mit Gas gefüllten Reifen umfasst und mit diesem auf einem Untergrund aufsteht, ist insbesondere dadurch weitergebildet, dass
- der Fahrzeugaufbau, vorzugsweise sprunghaft, mit einer Zusatzmasse belastet und dadurch relativ zu dem Untergrund zu einer, insbesondere vertikalen, mechanischen Schwingung angeregt wird und
- ein die mechanische Schwingung charakterisierendes Antwortsignal, vorzugsweise automatisch, gemessen und analysiert wird, wodurch wenigstens ein den aktuellen Gasdruck im Reifen charakterisierender Antwortwert bestimmt wird.

Der mit Gas gefüllte Reifen bildet ein elastisches Element, dessen Federsteifigkeit abhängig vom Gasdruck im Reifen ist. Ist ein zu geringer Gasdruck im Reifen vorhanden, schwingt der Fahrzeugaufbau, vorzugsweise in vertikaler Richtung, mit einer anderen, beispielsweise niedrigeren, Frequenz, als wenn ein ausreichender Gasdruck im Reifen vorhanden wäre. Insbesondere verändert sich eine Eigenfrequenz des Fahrzeugaufbaus in einem höheren Mode. Bevorzugt wird das Belasten des Fahrzeugaufbaus mit der Zusatzmasse dazu genutzt, den Fahrzeugaufbau zu einer Schwingung anzuregen und dessen Schwingungsverhalten zu detektieren. Vorteilhaft wird vor Fahrtantritt analysiert, ob zu wenig oder gar kein Gasdruck im Reifen vorhanden ist, insbesondere ohne den Motor starten und/oder ohne das Fahrzeug bewegen zu müssen.

Der Gasdruck im Reifen entspricht insbesondere dem Druck des Gases im Reifen. Beispielsweise wird der Gasdruck auch als Reifendruck bezeichnet. Bevorzugt ist dem Reifen ein, vorzugsweise vorgegebener, Referenzdruck zugeordnet. Der Referenzdruck entspricht einem Gasdruck, bei dem insbesondere Fahrtauglichkeit vorliegt. Das Gas ist vorzugsweise Luft. Insbesondere ist das Fahrzeug ein Kraftfahrzeug.

Bevorzugt erfolgt das Belasten des Fahrzeugaufbaus mit der Zusatzmasse sowie das Messen und Analysieren des Antwortsignals vor, vorzugsweise jedem, Fahrtantritt und/oder im Stillstand des Fahrzeugs. Vorteilhaft wird das Verfahren bei stillstehendem Fahrzeug durchgeführt. Bevorzugt wird das Verfahren mehrfach durchgeführt. Vorzugsweise erfolgt das Belasten des Fahrzeugaufbaus mit der Zusatzmasse durch Einsteigen und/oder Hineinsetzen einer Person in das Fahrzeug. Die Person ist insbesondere ein Fahrzeuginsasse und/oder der oder ein Fahrer. Vorteilhaft ist die Zusatzmasse durch die Masse und/oder das Gewicht der Person gegeben. Bevorzugt ist der Fahrzeugaufbau mittels einer oder wenigstens einer Fahrzeugfeder federnd auf dem Fahrzeugrad abgestützt.

Gemäß einer Weiterbildung umfasst das Fahrzeug einen Insassenraum. Bevorzugt ist in dem Insassenraum wenigstens ein Fahrzeugsitz vorgesehen. Das Einsteigen und/oder das Hineinsetzen der Person in das Fahrzeug bedeutet insbesondere, dass die Person sich in den Insassenraum hinein begibt und/oder auf dem Fahrzeugsitz Platz nimmt.

Bevorzugt wird bei der, vorzugsweise vertikalen, mechanischen Schwingung eine Resonanz erster Ordnung durch die Masse des Fahrzeugaufbaus und durch die, vorzugsweise vertikale, Federsteifigkeit der Fahrzeugfeder bestimmt, die z.B. eine Schraubenfeder ist. Die Resonanzfrequenz liegt in der Regel im unteren einstelligen Bereich, je nach Fahrzeugtyp z.B. zwischen 1 bis 3 Hz. Die, vorzugsweise vertikale, Federsteifigkeit des Reifens liegt bevorzugt ein bis zwei Zehnerpotenzen höher als die, vorzugsweise vertikale, Federsteifigkeit der Fahrzeugfeder. Somit ergibt sich bei geringem Gasdruck im Reifen insbesondere eine höhere Ordnung der Resonanzverschiebung.

Gemäß einer Ausgestaltung wird der wenigstens eine Antwortwert mit wenigstens einem, vorzugsweise vorgegebenen, Referenzwert verglichen, der insbesondere dem oder einem, vorzugsweise vorgegebenen, Referenzdruck des Gases zugeordnet ist. Durch den Vergleich des wenigstens einen Antwortwerts mit dem wenigstens einen Referenzwert kann z.B. ermittelt werden, ob ein der Fahrtauglichkeit genügender Reifendruck vorhanden ist oder nicht. Bevorzugt charakterisiert der wenigstens eine Referenzwert den oder einen Referenzdruck des Gases. Insbesondere ist der Reifen fahrtauglich, wenn der Gasdruck dem Referenzdruck entspricht oder nicht über vorgegebene Toleranzgrenzen hinaus von dem Referenzdruck abweicht.

Bevorzugt wird durch den Vergleich des wenigstens einen Antwortwerts mit dem wenigstens einen Referenzwert der Reifendruck und/oder die Fahrtauglichkeit des Reifens ermittelt. Vorzugsweise charakterisiert ein Unterschied und/oder eine Differenz zwischen dem wenigstens einen Antwortwert und dem wenigstens einen Referenzwert eine Abweichung des aktuellen Gasdrucks von dem Referenzdruck und somit insbesondere die Fahrtauglichkeit des Reifens. Vorteilhaft charakterisiert der wenigstens eine Antwortwert das Schwingungsverhalten des Fahrzeugaufbaus und/oder des Reifens, welches insbesondere abhängig vom Gasdruck ist. Bevorzugt charakterisiert der wenigstens eine Referenzwert das Schwingungsverhalten des Fahrzeugaufbaus und/oder des Reifens, wenn der Gasdruck dem Referenzdruck entspricht.

Gemäß einer Weiterbildung wird bei Referenzdruck des Gases
- der Fahrzeugaufbau, vorzugsweise sprunghaft, mit einer Referenz-Zusatzmasse belastet und dadurch relativ zu dem Untergrund zu einer, insbesondere vertikalen, mechanischen Referenz-Schwingung angeregt und
- ein die mechanische Referenz-Schwingung charakterisierendes Referenz-Antwortsignal, vorzugsweise automatisch, gemessen und analysiert, wodurch der wenigstens eine Referenzwert bestimmt wird. Vorzugsweise stimmt die Referenz-Zusatzmasse mit der Zusatzmasse überein oder näherungsweise überein.

Bevorzugt bildet oder umfasst der wenigstens eine Antwortwert einen oder wenigstens einen, insbesondere für das Schwingungsverhalten des Fahrzeugaufbaus und/oder des Reifens charakteristischen, Frequenzwert. Vorzugsweise charakterisiert der wenigstens eine Antwortwert und/oder der wenigstens eine Frequenzwert eine oder wenigstens eine für das Schwingungsverhalten des Fahrzeugaufbaus und/oder des Reifens charakteristische Frequenz. Vorteilhaft charakterisiert der wenigstens eine Antwortwert und/oder der wenigstens eine Frequenzwert eine oder wenigstens eine Eigenfrequenz des Fahrzeugaufbaus und/oder des Reifens. In diesem Fall bildet der oder der wenigstens eine Frequenzwert z.B. einen oder wenigstens einen Frequenzeigenwert.

Bevorzugt bildet oder umfasst der wenigstens eine Referenzwert einen oder wenigstens einen, insbesondere für das Schwingungsverhalten des Fahrzeugaufbaus und/oder des Reifens bei Referenzdruck des Gases charakteristischen, Referenz-Frequenzwert. Vorzugsweise charakterisiert der wenigstens eine Referenzwert und/oder der wenigstens eine Referenz-Frequenzwert eine oder wenigstens eine für das Schwingungsverhalten des Fahrzeugaufbaus und/oder des Reifens bei Referenzdruck des Gases charakteristische Frequenz. Vorteilhaft charakterisiert der wenigstens eine Referenzwert und/oder der wenigstens eine Referenz-Frequenzwert eine oder wenigstens eine Eigenfrequenz des Fahrzeugaufbaus und/oder des Reifens bei Referenzdruck des Gases. In diesem Fall bildet der oder der wenigstens eine Referenz-Frequenzwert z.B. einen oder wenigstens einen Referenz-Frequenzeigenwert. Insbesondere schwingt der Fahrzeugaufbau und/oder der Reifen bei Referenzdruck des Gases mit einer anderen Frequenz als wenn kein oder ein zu geringer oder ein anderer Gasdruck vorliegt.

Gemäß einer Ausgestaltung wird bei der Analyse des Antwortsignals das Antwortsignal oder ein von diesem abgeleitetes Signal in den Frequenzbereich transformiert. Vorzugsweise wird bei der Analyse des Antwortsignals das Antwortsignal oder das oder ein von diesem abgeleitetes Signal durch Fourier-Transformation oder durch diskrete Fourier-Transformation (DFT) in den Frequenzbereich transformiert. Die diskrete Fourier-Transformation ist insbesondere eine Schnelle-Fourier-Transformation (FFT).

Bevorzugt bildet oder umfasst der wenigstens eine Antwortwert einen oder wenigstens einen Wert aus dem Spektrum des Antwortsignals. Vorzugsweise ist oder wird der wenigstens eine Antwortwert einem oder wenigstens einem, insbesondere relativen oder absoluten, Maximum im Spektrum des Antwortsignals zugeordnet. Vorteilhaft bildet oder umfasst der wenigstens eine Antwortwert einen oder wenigstens einen Amplitudenwert im Spektrum des Antwortsignals, der vorzugsweise dem oder dem wenigstens einen Maximum zugeordnet ist. Ergänzend oder alternativ bildet oder umfasst der wenigstens eine Antwortwert z.B. einen oder wenigstens einen Frequenzwert im Spektrum des Antwortsignals, der vorzugsweise dem oder dem wenigstens einen Maximum zugeordnet ist.

Gemäß einer Ausgestaltung umfasst der wenigstens eine Antwortwert mehrere Antwortwerte. Ferner umfasst der wenigstens eine, insbesondere vorgegebene, Referenzwert bevorzugt mehrere, insbesondere vorgegebene, Referenzwerte. In diesem Fall erfolgt der Vergleich des wenigstens einen Antwortwerts mit dem wenigstens einen Referenzwert insbesondere dadurch, dass die Antwortwerte mit dem wenigstens einen Referenzwert oder mit den Referenzwerten verglichen werden. Bevorzugt wird durch den Vergleich wenigstens eines der Antwortwerte mit dem wenigstens einen Referenzwert oder mit wenigstens einem der Referenzwerte der Reifendruck und/oder die Fahrtauglichkeit des Reifens ermittelt. Insbesondere charakterisiert der oder ein Unterschied und/oder die oder eine Differenz zwischen wenigstens einem der Antwortwerte und dem wenigstens einen Referenzwert oder wenigstens einem der Referenzwerte eine Abweichung des aktuellen Gasdrucks von dem Referenzdruck und somit insbesondere die Fahrtauglichkeit des Reifens.

Gemäß einer Weiterbildung bildet oder umfasst der wenigstens eine Antwortwert und/oder bilden oder umfassen die Antwortwerte ein oder mehrere Antwortwert-Tupel, welches oder welche jeweils einen Frequenzwert und einen diesem zugeordneten Amplitudenwert aus dem Spektrum des Antwortsignals umfassen. Bevorzugt repräsentieren das oder jedes Antwortwert-Tupel und/oder dessen Werte ein, insbesondere relatives oder absolutes, Maximum im Spektrum des Antwortsignals. Vorteilhaft repräsentiert der Frequenzwert des oder jedes Antwortwert-Tupels eine oder wenigstens eine Eigenfrequenz des Fahrzeugaufbaus und/oder des Reifens. Das oder jedes Antwortwert-Tupel ist vorzugsweise ein 2-Tupel und wird z.B. auch als Antwortwert-Paar bezeichnet.

Gemäß einer Ausgestaltung bildet oder umfasst der wenigstens eine Referenzwert und/oder bilden oder umfassen die Referenzwerte ein oder wenigstens ein Referenzwert-Tupel. Der wenigstens eine Referenzwert und/oder das oder das wenigstens eine Referenzwert-Tupel umfasst insbesondere einen Frequenzwert und einen diesem zugeordneten Amplitudenwert. Der Frequenzwert des wenigstens einen Referenzwerts und/oder des oder des wenigstens einen Referenzwert-Tupels wird z.B. auch als Referenz-Frequenzwert bezeichnet. Ferner wird der Amplitudenwert des wenigstens einen Referenzwerts und/oder des oder des wenigstens einen Referenzwert-Tupels z.B. auch als Referenz-Amplitudenwert bezeichnet. Der Frequenzwert und der Amplitudenwert des wenigstens einen Referenzwerts und/oder des oder des wenigstens einen Referenzwert-Tupels bilden insbesondere Werte aus dem oder einem Spektrum des Referenz-Antwortsignals.

Bevorzugt repräsentiert das oder das wenigstens eine Referenzwert-Tupel und/oder repräsentieren dessen Werte ein oder wenigstens ein, insbesondere relatives oder absolutes, Maximum im Spektrum des Referenz-Antwortsignals. Vorteilhaft repräsentiert der Frequenzwert des oder des wenigstens einen Referenzwert-Tupels eine oder wenigstens eine Eigenfrequenz des Fahrzeugaufbaus und/oder des Reifens bei Referenzdruck des Gases. Das oder das wenigstens eine Referenzwert-Tupel ist vorzugsweise ein 2-Tupel und wird z.B. auch als Referenzwert-Paar bezeichnet.

Gemäß einer Weiterbildung wird zum Vergleich des wenigstens einen Antwortwerts mit dem wenigstens einen Referenzwert und/oder zum Vergleich der Antwortwerte mit den Referenzwerten der Amplitudenwert des Referenzwert-Tupels mit dem Amplitudenwert des oder eines der Antwortwert-Tupel verglichen. Insbesondere wird zum Vergleich des wenigstens einen Antwortwerts mit dem wenigstens einen Referenzwert und/oder zum Vergleich der Antwortwerte mit den Referenzwerten der Amplitudenwert des Referenzwert-Tupels mit dem Amplitudenwert des oder eines der Antwortwert-Tupel verglichen, dessen Frequenzwert mit dem Frequenzwert des Referenzwert-Tupels übereinstimmt oder näherungsweise übereinstimmt und/oder z.B. eine Abweichung zu dessen Frequenzwert aufweist, die innerhalb vorgegebener Toleranzgrenzen liegt. Die Toleranzgrenzen berücksichtigen z.B. eine Frequenzabweichung aufgrund von Messfehlern oder Messungenauigkeiten und/oder aufgrund von Störgrößen und/oder aufgrund von Verschleiß. Innerhalb der Toleranzgrenzen stimmt der Frequenzwert des Antwortwert-Tupels mit dem Frequenzwert des Referenzwert-Tupels insbesondere überein oder näherungsweise überein. Bevorzugt charakterisiert der Unterschied und/oder die Differenz zwischen den beiden miteinander verglichenen Amplitudenwerten eine Abweichung des aktuellen Gasdrucks von dem Referenzdruck und somit insbesondere die Fahrtauglichkeit des Reifens.

Gemäß einer Ausgestaltung wird zum Vergleich des wenigstens einen Antwortwerts mit dem wenigstens einen Referenzwert und/oder zum Vergleich der Antwortwerte mit den Referenzwerten der Frequenzwert des Referenzwert-Tupels mit dem Frequenzwert des oder eines der Antwortwert-Tupel verglichen. Bevorzugt charakterisiert der Unterschied und/oder die Differenz zwischen den beiden miteinander verglichenen Frequenzwerten eine Abweichung des aktuellen Gasdrucks von dem Referenzdruck und somit insbesondere die Fahrtauglichkeit des Reifens.

Gemäß einer Ausgestaltung ist an dem Fahrzeugaufbau ein oder wenigstens ein Sensor vorgesehen, mittels welchem das, insbesondere die mechanische Schwingung charakterisierende, Antwortsignal messbar ist oder gemessen wird. Der oder der wenigstens eine Sensor bildet oder umfasst z.B. einen oder wenigstens einen Beschleunigungssensor und/oder einen oder wenigstens einen Kraftsensor und/oder einen oder wenigstens einen Wegsensor, der vorzugsweise ein Höhenstandssensor ist. Das oder ein von dem Beschleunigungssensor gelieferte Signal bildet beispielsweise das Antwortsignal. Bevorzugt repräsentiert und/oder charakterisiert das Antwortsignal an dem Fahrzeugaufbau, insbesondere aufgrund der mechanischen Schwingung, auftretende Beschleunigungen. Vorteilhaft ist das von dem Beschleunigungssensor gelieferte Signal ein elektrisches Signal. Das oder ein von dem Kraftsensor gelieferte Signal bildet beispielsweise das Antwortsignal. Vorzugsweise repräsentiert und/oder charakterisiert das Antwortsignal an dem Fahrzeugaufbau, insbesondere aufgrund der mechanischen Schwingung, auftretende Kräfte. Vorteilhaft ist das von dem Kraftsensor gelieferte Signal ein elektrisches Signal. Das oder ein von dem Wegsensor gelieferte Signal wird vorzugsweise zweimal zeitlich abgeleitet. Das zweimal zeitlich abgeleitete Signal des Wegsensors bildet beispielsweise das Antwortsignal. Bevorzugt repräsentiert und/oder charakterisiert das Antwortsignal an dem Fahrzeugaufbau, insbesondere aufgrund der mechanischen Schwingung, auftretende Beschleunigungen. Vorteilhaft ist das von dem Wegsensor gelieferte Signal ein elektrisches Signal. Insbesondere ist das zweimal zeitlich abgeleitete Signal des Wegsensors ein elektrisches Signal.

Die Erfindung wird nachfolgend anhand einer bevorzugten Ausführungsform unter Bezugnahme auf die Zeichnung beschrieben. In der Zeichnung zeigen:
- Fig. 1: eine schematische Darstellung eines Fahrzeugs mit Reifen und
- Fig. 2: ein schematisches Schaltbild zur Erläuterung eines Verfahrens zum Prüfen des Reifendrucks gemäß einer Ausführungsform.

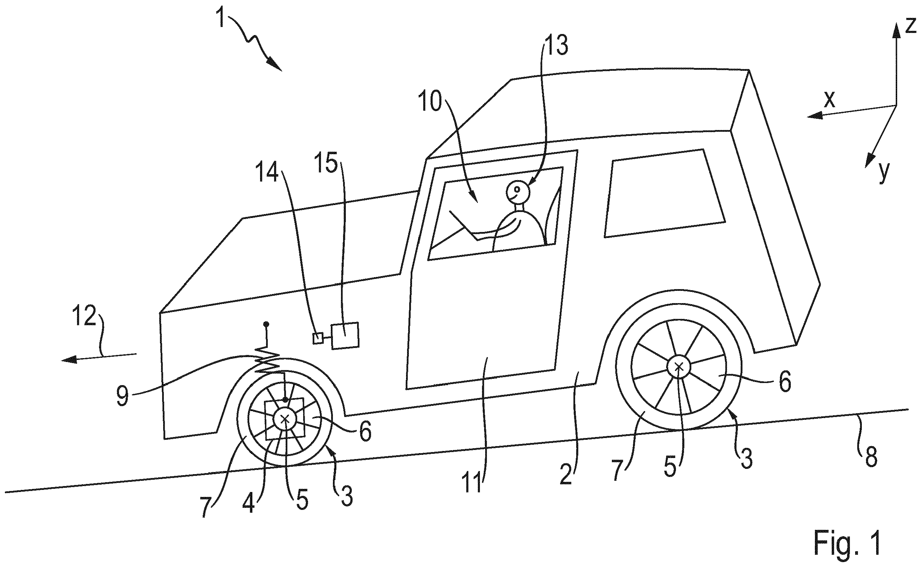

Aus Fig. 1 ist eine schematische Darstellung eines Fahrzeugs 1 mit einem Fahrzeugaufbau (Karosserie) 2 und mehreren Fahrzeugrädern 3 ersichtlich, die jeweils eine an einem Radträger 4 um eine Raddrehachse 5 drehbar gelagerte Felge 6 und einen diese umringenden Reifen 7 aufweisen, der auf einem Untergrund 8 aufsteht und mit einem Gas gefüllt ist, bei dem es sich bevorzugt um Luft handelt. Der Fahrzeugaufbau 2 ist mittels Fahrzeugfedern 9 federnd auf den Radträgern 4 abgestützt. Ferner weist der Fahrzeugaufbau 2 einen Insassenraum 10 und eine Fahrzeugtür 11 auf, mittels welcher ein Zugang zu dem Insassenraum 10 freigebbar ist. Dem Fahrzeug 1 sind eine Fahrzeuglängsrichtung x, eine Fahrzeugquerrichtung y und eine Fahrzeughochrichtung z zugeordnet, wobei diese Richtungen x, y und z schematisch durch ein Koordinatensystem dargestellt sind. Ferner ist durch einen Pfeil 12 die gewöhnliche Vorwärtsfahrtrichtung des Fahrzeugs 1 angedeutet, die insbesondere in Fahrzeuglängsrichtung x verläuft.

In Fig. 1 ist im Insassenraum 10 eine Person 13 erkennbar, die auch als Fahrzeuginsasse bezeichnet wird. Insbesondere handelt es sich bei der Person 13 um den Fahrer des Fahrzeugs 1. Beim Einsteigen der Person 13 in den Insassenraum 10 erhöht sich schlagartig das Gesamtgewicht des Fahrzeugaufbaus 2, da zu dem Gewicht des Fahrzeugaufbaus 2 das Körpergewicht der Person 13 hinzutritt. Die Fahrzeugfeder 9 wird dadurch schlagartig komprimiert, sodass der Fahrzeugaufbau 2 zu einer mechanischen Schwingung in Fahrzeughochrichtung z angeregt wird, die gemäß der Ausführungsform insbesondere der vertikalen Richtung entspricht. Ein die Schwingung des Fahrzeugaufbaus 2 charakterisierendes Antwortsignal wird mittels eines Beschleunigungssensors 14 gemessen, der an dem Fahrzeugaufbau 2 vorgesehen mit einer Recheneinheit 15 verbunden ist, mittels welcher aus dem Antwortsignal wenigstens ein das Schwingungsverhalten des Fahrzeugaufbaus 2 charakterisierender Antwortwert bestimmt und mit wenigstens einem Referenzwert verglichen wird, der eine entsprechende Schwingung bei einem Referenzdruck des Gases des Reifens 7 charakterisiert. Stimmt der wenigstens eine Antwortwert innerhalb vorgegebener Toleranzgrenzen mit dem wenigstens einen Referenzwert überein, so kann darauf geschlossen werden, dass der Gasdruck im Reifen dem Referenzdruck entspricht, sodass der Reifen 7 fahrtauglich ist. Weicht der wenigstens eine Antwortwert hingegen über diese Toleranzgrenzen hinaus von dem wenigstens einen Referenzwert ab, so kann darauf geschlossen werden, dass der Gasdruck im Reifen nicht dem Referenzdruck entspricht, sodass der Reifen 7 insbesondere nicht fahrtauglich ist.

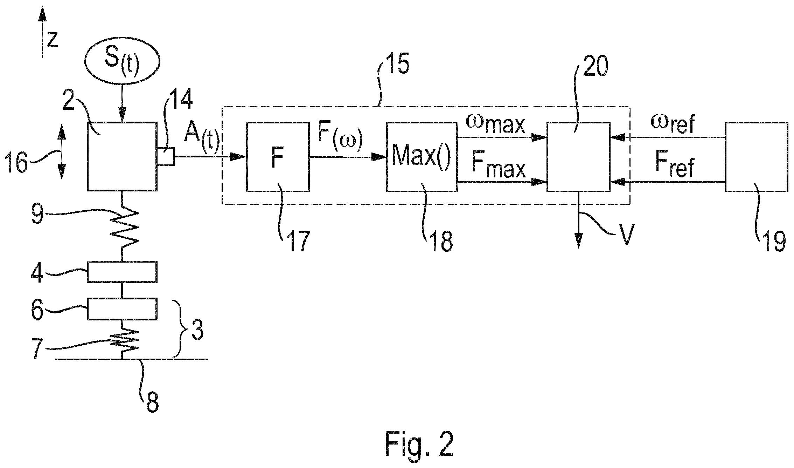

Die Bestimmung des wenigstens einen Antwortwerts erfolgt bevorzugt im Frequenzbereich. Dazu werden das Antwortsignal, vorzugsweise mittels einer diskreten Fourier-Transformation, in den Frequenzbereich transformiert und der wenigstens eine Antwortwert aus dem Spektrum des Antwortsignals bestimmt. Dies wird unter Bezugnahme auf Fig. 2 näher erläutert.

In Fig. 2 ist der Reifen 7 schematisch als Feder zwischen der Felge 6 und dem Untergrund 8 dargestellt. Durch das Einsteigen der Person 13 in den Insassenraum 10 wird in den Fahrzeugaufbau 2 ein Anregungssignal S in Form eines Sprungs eingeleitet, welches den Fahrzeugaufbau 2 zu einer mechanischen Schwingung anregt, die durch den Doppelpfeil 16 angedeutet ist. Das oder ein die Schwingung charakterisierende Antwortsignal A wird mittels des Beschleunigungssensors 14 gemessen und der Recheneinheit 15 zugeführt, die eine Transformationseinheit 17 aufweist, mittels welcher das Antwortsignal A durch eine, insbesondere diskrete, Fourier-Transformation in den Frequenzbereich transformiert wird. Das transformierte Antwortsignal F beschreibt ein Spektrum (Frequenzspektrum) und wird einer Auswerteeinheit 18 zugeführt, mittels welcher wenigstens ein Maximum des Spektrums ermittelt und die zugehörigen Werte, welche die Schwingung charakterisierende Antwortwerte bilden, in Form wenigstens eines Frequenzwerts ω_max und wenigstens eines Amplitudenwerts F_max bestimmt werden. Die Antwortwerte bilden oder umfassen somit wenigstens ein Antwortwert-Tupel, welches einen Frequenzwert und einen Amplitudenwert umfasst. In diesem Fall umfasst das Antwortwert-Tupel insbesondere den Frequenzwert w_max und den Amplitudenwert F_max. Die Recheneinheit 15 hat Zugriff auf eine Speichereinheit 19, in der Referenzwerte gespeichert sind, die wenigstens einen Referenz-Frequenzwert ω_ref und wenigstens einen Referenz-Amplitudenwert F_ref umfassen und die Schwingung bei Referenzdruck des Gases charakterisieren. Die Referenzwerte bilden oder umfassen somit wenigstens ein Referenzwert-Tupel, welches einen Frequenzwert und einen Amplitudenwert umfasst. In diesem Fall umfasst das Referenzwert-Tupel insbesondere den Frequenzwert ω_ref und den Amplitudenwert F_ref. Der Antwortwerte ω_max und F_max sowie die Referenzwert ω_ref und F_ref werden einer Vergleichseinheit 20 zugeführt und miteinander verglichen, wonach das ermittelte Vergleichsergebnis V ausgegeben wird, welches eine Abweichung des aktuellen Gasdrucks vom Referenzdruck charakterisiert.

### Bezugszeichen

- 1: Fahrzeug
- 2: Fahrzeugaufbau
- 3: Fahrzeugrad
- 4: Radträger
- 5: Raddrehachse
- 6: Felge
- 7: Reifen
- 8: Untergrund
- 9: Fahrzeugfeder
- 10: Insassenraum
- 11: Fahrzeugtür
- 12: Fahrtrichtung
- 13: Person / Fahrzeuginsasse
- 14: Beschleunigungssensor
- 15: Recheneinheit
- 16: Schwingung
- 17: Transformationseinheit
- 18: Auswerteeinheit
- 19: Speichereinheit
- 20: Vergleichseinheit

- x: Fahrzeuglängsrichtung
- y: Fahrzeugquerrichtung
- z: Fahrzeughochrichtung
- A: Antwortsignal
- V: Vergleichsergebnis

## Patentansprüche

1. Verfahren zum Prüfen des Reifendrucks eines Fahrzeugs (1), welches wenigstens ein Fahrzeugrad (3) und einen Fahrzeugaufbau (2) aufweist, der federnd auf dem Fahrzeugrad (3) abgestützt ist, welches einen mit Gas gefüllten Reifen (7) umfasst und mit diesem auf einem Untergrund (8) aufsteht, **dadurch gekennzeichnet, dass**
- der Fahrzeugaufbau (2) mit einer Zusatzmasse belastet und dadurch relativ zu dem Untergrund (8) zu einer mechanischen Schwingung (16) angeregt wird und
- ein die mechanische Schwingung (16) charakterisierendes Antwortsignal (A) gemessen und analysiert wird, wodurch wenigstens ein den aktuellen Gasdruck im Reifen (7) charakterisierender Antwortwert (w_max, F_max) bestimmt wird.

2. Verfahren nach Anspruch 1, **dadurch gekennzeichnet, dass** der wenigstens eine Antwortwert (ω_max, F_max) mit wenigstens einem vorgegebenen Referenzwert (ω_ref, F_ref) verglichen wird, der einem Referenzdruck des Gases zugeordnet ist.

3. Verfahren nach Anspruch 2, **dadurch gekennzeichnet, dass** eine Differenz (V) zwischen dem wenigstens einen Antwortwert (ω_max, F_max) und dem wenigstens einen Referenzwert (ω_ref, F_ref) eine Abweichung des aktuellen Gasdrucks von dem Referenzdruck charakterisiert.

4. Verfahren nach Anspruch 2 oder 3, **dadurch gekennzeichnet, dass** der wenigstens eine Referenzwert (w_ref, F_ref) das Schwingungsverhalten des Fahrzeugaufbaus (2) bei Referenzdruck des Gases charakterisiert.

5. Verfahren nach einem der Ansprüche 2 bis 4, **dadurch gekennzeichnet, dass** bei Referenzdruck des Gases
- der Fahrzeugaufbau (2) mit einer Referenz-Zusatzmasse belastet und dadurch relativ zu dem Untergrund zu einer mechanischen Referenz-Schwingung angeregt wird und
- ein die mechanische Referenz-Schwingung charakterisierendes Referenz-Antwortsignal gemessen und analysiert wird, wodurch der wenigstens eine Referenzwert (ω_ref, F_ref) bestimmt wird.

6. Verfahren nach einem der vorangehenden Ansprüche, **dadurch gekennzeichnet, dass** bei der Analyse des Antwortsignals (A) das Antwortsignal (A) oder ein von diesem abgeleitetes Signal in den Frequenzbereich transformiert wird und der wenigstens eine Antwortwert (w_max, F_max) wenigstens einen Wert aus dem Spektrum des Antwortsignals (A) bildet.

7. Verfahren nach Anspruch 6, **dadurch gekennzeichnet, dass** der wenigstens eine Antwortwert (ω_max, F_max) wenigstens einem Maximum im Spektrum des Antwortsignals (A) zugeordnet ist.

8. Verfahren nach Anspruch 6 oder 7, **dadurch gekennzeichnet, dass** der wenigstens ein Antwortwert (F_max) einen Amplitudenwert im Spektrum des Antwortsignals (A) und/oder wenigstens einen Frequenzwert (F_max) im Spektrum des Antwortsignals (A) umfasst.

9. Verfahren nach einem der vorangehenden Ansprüche, **dadurch gekennzeichnet, dass** an dem Fahrzeugaufbau wenigstens ein Beschleunigungssensor (17) vorgesehen ist, mittels welchem das Antwortsignal (A) gemessen wird, welches an dem Fahrzeugaufbau (2) auftretende Beschleunigungen repräsentiert.

10. Verfahren nach einem der vorangehenden Ansprüche, **dadurch gekennzeichnet, dass** das Belasten des Fahrzeugaufbaus (2) mit der Zusatzmasse durch Einsteigen einer Person (13) in das Fahrzeug (1) erfolgt.

## Claims

1. Method for testing the tyre pressure of a vehicle (1) having at least one vehicle wheel (3) and a vehicle body (2) which is resiliently supported on the vehicle wheel (3) which comprises a gas-filled tyre (7) and stands, with said tyre, on a substrate (8), **characterized in that**
- the vehicle body (2) is loaded with an additional mass and is thereby excited to perform a mechanical vibration (16) relative to the substrate (8), and
- a response signal (A) characterizing the mechanical vibration (16) is measured and analysed, thereby determining at least one response value (ω_max, F_max) that characterizes the current gas pressure in the tyre (7) .

2. Method according to Claim 1, **characterized in that** the at least one response value (ω_max, F_max) is compared with at least one predefined reference value (ω_ref, F_ref) which is assigned to a reference pressure of the gas.

3. Method according to Claim 2, **characterized in that** a difference (V) between the at least one response value (ω_max, F_max) and the at least one reference value (w_ref, F_ref) characterizes a deviation of the current gas pressure from the reference pressure.

4. Method according to Claim 2 or 3, **characterized in that** the at least one reference value (ω_ref, F_ref) characterizes the vibration behaviour of the vehicle body (2) at the reference pressure of the gas.

5. Method according to one of Claims 2 to 4, **characterized in that**, at the reference pressure of the gas,
- the vehicle body (2) is loaded with a reference additional mass and is thereby excited to perform a mechanical reference vibration relative to the substrate, and
- a reference response signal characterizing the mechanical reference vibration is measured and analysed, thereby determining the at least one reference value (w_ref, F_ref).

6. Method according to one of the preceding claims, **characterized in that**, when analysing the response signal (A), the response signal (A) or a signal derived therefrom is transformed into the frequency domain and the at least one response value (ω_max, F_max) forms at least one value from the spectrum of the response signal (A) .

7. Method according to Claim 6, **characterized in that** the at least one response value (ω_max, F_max) is assigned to at least one maximum in the spectrum of the response signal (A).

8. Method according to Claim 6 or 7, **characterized in that** the at least one response value (F_max) comprises an amplitude value in the spectrum of the response signal (A) and/or at least one frequency value (F_max) in the spectrum of the response signal (A).

9. Method according to one of the preceding claims, **characterized in that** at least one acceleration sensor (17) is provided on the vehicle body and is used to measure the response signal (A) representing accelerations that occur at the vehicle body (2).

10. Method according to one of the preceding claims, **characterized in that** the vehicle body (2) is loaded with the additional mass by virtue of a person (13) getting into the vehicle (1).

## Revendications

1. Procédé de contrôle de la pression des pneus d'un véhicule (1), lequel possède au moins une roue de véhicule (3) et une carrosserie de véhicule (2), laquelle est soutenue de manière élastique sur la roue de véhicule (3), laquelle comporte un pneu (7) rempli de gaz et repose avec celui-ci sur un sol (8), **caractérisé en ce que**
- la carrosserie de véhicule (2) est alourdie avec une masse supplémentaire et ainsi excitée en une oscillation mécanique (16) par rapport au sol (8) et
- un signal de réponse (A) qui caractérise l'oscillation mécanique (16) est mesuré et analysé, moyennant quoi au moins une valeur de réponse (ω_max, F_max) qui caractérise la pression de gaz actuelle dans le pneu (7) est déterminée.

2. Procédé selon la revendication 1, **caractérisé en ce que** l'au moins une valeur de réponse (ω_max, F_max) est comparée avec au moins une valeur de référence (ω_ref, F_ref) prédéfinie, laquelle est associée à une pression de référence du gaz.

3. Procédé selon la revendication 2, **caractérisé en ce qu'**une différence (V) entre l'au moins une valeur de réponse (ω_max, F_max) et l'au moins une valeur de référence (ω_ref, F_ref) caractérise un écart entre la pression de gaz actuelle et la pression de référence.

4. Procédé selon la revendication 2 ou 3, **caractérisé en ce que** l'au moins une valeur de référence (ω_ref, F_ref) caractérisé le comportement oscillant de la carrosserie de véhicule (2) à la pression de référence du gaz.

5. Procédé selon l'une des revendications 2 à 4, **caractérisé en ce qu'**à la pression de référence du gaz
- la carrosserie de véhicule (2) est alourdie avec une masse supplémentaire de référence et est ainsi excitée en une oscillation mécanique de référence par rapport au sol et
- un signal de mesure de référence qui caractérise l'oscillation mécanique de référence est mesuré et analysé, moyennant quoi l'au moins une valeur de référence (ω_ref, F_ref) est déterminée.

6. Procédé selon l'une des revendications précédentes, **caractérisé en ce que** lors de l'analyse du signal de réponse (A), le signal de réponse (A) ou un signal qui en est dérivé est transformé dans la plage de fréquences et l'au moins une valeur de réponse (ω_max, F_max) forme au moins une valeur issue du spectre du signal de réponse (A) .

7. Procédé selon la revendication 6, **caractérisé en ce que** l'au moins une valeur de réponse (ω_max, F_max) est associée à au moins un maximum dans le spectre du signal de réponse (A) .

8. Procédé selon la revendication 6 ou 7, **caractérisé en ce que** l'au moins une valeur de réponse (F_max) comprend une valeur d'amplitude dans le spectre du signal de réponse (A) et/ou au moins une valeur de fréquence (F_max) dans le spectre du signal de réponse (A) .

9. Procédé selon l'une des revendications précédentes, **caractérisé en ce qu'**au moins un capteur d'accélération (17) est présent sur la carrosserie de véhicule, au moyen duquel est mesuré le signal de réponse (A) qui représente les accélérations qui se produisent au niveau de la carrosserie de véhicule (2).

10. Procédé selon l'une des revendications précédentes, **caractérisé en ce que** l'alourdissement de la carrosserie de véhicule (2) s'effectue avec la masse supplémentaire par la montée d'une personne (13) dans le véhicule (1).
